# FASCICULE DE BREVET EUROPEEN

(11) **EP 1 346 153 B1**
(45) Date de publication et mention de la délivrance du brevet: **26.07.2006**
(21) Numéro de dépôt: 01994929.6
(22) Date de dépôt: 20.12.2001
(51) Int. Cl.: F03C 1/04

(54) **DISPOSITIF DE MOTEUR HYDRAULIQUE AYANT UN SELECTEUR DE CYLINDREE ET UN SYSTEME DE FREINAGE.**
HYDRAULIKMOTORVORRICHTUNG MIT HUBVOLUMENWAHLVORRICHTUNG UND BREMSSYSTEM
HYDRAULIC MOTOR DEVICE WITH DISPLACEMENT SELECTOR AND A BRAKING SYSTEM.

(30) Priorité: 28.12.2000 FR 0017171
(43) Date de publication de la demande: 24.09.2003
(73) Titulaire: POCLAIN HYDRAULICS INDUSTRIE, 60411 Verberie (FR)
(72) Inventeur: BIGO, Louis, F-60200 Compiègne (FR); RUZICKA, Daniel, F-60180 Nogent-sur-Oise (FR); ALLART, Bernard, F-60800 Crepy-en-Valois (FR)
(74) Mandataire: Intes, Didier Gérard André
(86) Numéro de dépôt international: PCT/FR2001/004097
(87) Numéro de publication internationale: WO 2002/053907

(56) Documents cités:
- FR-A- 2 655 090
- FR-A- 2 673 684

## Description

La présente invention concerne un dispositif d'entraînement avec un moteur hydraulique, comprenant un sélecteur de cylindrée susceptible d'être déplacé entre une première position correspondant à une grande cylindrée active de fonctionnement et une deuxième position correspondant à une petite cylindrée active de fonctionnement, le dispositif comprenant des moyens de commande du sélecteur qui comprennent une chambre de commande hydraulique susceptible d'être alimentée en fluide sous pression par un conduit de commande pour solliciter le déplacement du sélecteur de cylindrée dans sa deuxième position à l'encontre de l'effort exercé par des premiers moyens de rappel, le dispositif comprenant en outre un système de freinage du moteur hydraulique qui comporte des moyens de freinage mobiles entre une position de freinage et une position de défreinage, ainsi qu'une chambre de défreinage susceptible d'être alimentée en fluide sous pression par un conduit de défreinage pour solliciter lesdits moyens de freinage vers leur position de défreinage à l'encontre de l'effort exercé par des deuxièmes moyens de rappel.

Le moteur hydraulique est en particulier, mais pas exclusivement, à pistons radiaux.

Un dispositif de ce type est connu par le document FR 2 673 684. De manière classique, le système de freinage constitue un frein de parking qui est en position freinée lorsque l'on n'entretient pas une pression de fluide dans la chambre de défreinage. En situation de fonctionnement, il convient de faire régner une pression de fluide suffisante dans la chambre de défreinage pour réaliser le défreinage et d'alimenter correctement le moteur en fluide pour faire tourner son rotor. Par la commande du sélecteur de cylindrée, on peut sélectionner la cylindrée du moteur de manière à obtenir le couple moteur et la vitesse de rotation désirés.

La grande cylindrée du moteur est celle dans laquelle, pour un débit de fluide donné, il peut délivrer un couple élevé mais il fournit une vitesse de sortie réduite. En revanche, en petite cylindrée, la vitesse de sortie est plus élevée, mais le couple est plus faible.

La société Demanderesse a constaté que, dans certaines situations de fonctionnement, il existe un risque d'emballement de ce moteur. C'est le cas, par exemple, pour un moteur de translation d'un véhicule qui travaille en retenue sur une pente. Dans un tel cas, si le sélecteur est dans sa position de petite cylindrée, le moteur peut atteindre des vitesses de sortie élevées car il ne peut pas fournir un couple de retenue suffisant. Pour des raisons de sécurité, il faut maîtriser l'emballement, ce qui peut être obtenu en augmentant le couple de retenue du moteur, donc en passant le sélecteur dans sa position de grande cylindrée.

La présente invention vise à limiter les effets d'un début d'emballement par le passage automatique du sélecteur en grande cylindrée, donc de façon sécurisée sans l'intervention d'un opérateur.

Ce but est atteint grâce au fait que le conduit de commande est susceptible d'être relié à la chambre de défreinage pour faire communiquer cette dernière avec la chambre de commande et au fait que les premiers moyens de rappel sont aptes à rappeler le sélecteur de cylindrée dans sa première position de grande cylindrée lorsque, alors que la chambre de commande communique avec la chambre de défreinage par le conduit de commande, la pression dans ladite chambre de défreinage devient inférieure à une première pression seuil, tandis que les deuxièmes moyens de rappel sont aptes à rappeler les moyens de freinage dans leur position de freinage lorsque la pression dans la chambre de défreinage devient inférieure à une deuxième pression seuil inférieure à ladite première pression seuil.

Ainsi, c'est par la pression de fluide dans la chambre de défreinage que l'on peut éviter ou limiter les effets d'un emballement. Dans la mesure où la petite cylindrée autorise des vitesses plus élevées, pour un même débit de fluide, que la grande cylindrée et des couples plus faibles qui favorisent l'emballement, il est préférable de placer le sélecteur dans sa position de grande cylindrée pour que, d'une part, avec le même débit de fluide, le moteur ralentisse et que, d'autre part, on dispose d'un couple (de retenue) plus élevé.

L'idée originale de l'invention consiste à commander alors le passage de la petite cylindrée vers la grande cylindrée, en utilisant la pression dans la chambre de défreinage comme moyen de commande automatique.

L'invention se démarque de l'art antérieur.

En effet, dans le document FR 2 655 090, la commande de défreinage et celle du sélecteur de cylindrée sont dissociées.

Le document FR 2 673 684 propose de les associer, dans la mesure où la chambre de défreinage communique avec la chambre de commande du sélecteur de cylindrée.

Le sélecteur occupe naturellement une première position, qui correspond à la plus petite des deux cylindrées et dans laquelle il est constamment rappelé par les moyens de rappel. Lorsque l'on réalise un défreinage, la chambre de commande est automatiquement alimentée en fluide sous pression, ce qui tend à déplacer le sélecteur de cylindrée dans sa deuxième position de grande cylindrée.

Pour réaliser un changement de cylindrée dans les conditions de fonctionnement du moteur, c'est-à-dire lorsque la chambre de défreinage est remplie de fluide sous pression, il faut solliciter le sélecteur en déplacement vers sa première position de petite cylindrée, à l'encontre de la pression de fluide qui règne dans la chambre de défreinage. Pour ce faire, il est nécessaire que le sélecteur comporte une autre chambre de commande, alimentée en fluide par un autre conduit. Cet autre conduit est lui-même relié à un sélecteur d'alimentation, qui est relié ou bien à une alimentation en fluide, ou bien avec un retour de fluide.

Dans FR 2 673 684, on place automatiquement le sélecteur de cylindrée dans la position de petite cylindrée du moteur afin d'éviter tout entraînement intempestif du dispositif d'entraînement lorsque les moyens de freinage sont en position de freinage, sans pour autant "surdimensionner" le système de freinage.

Ainsi, FR 2 673 684 s'intéresse au problème de redémarrage après un freinage en cherchant à éviter que l'on puisse déplacer le véhicule équipé du dispositif d'entraînement lorsque le système de freinage est actif, les moyens de freinage étant en position de freinage.

La présente invention s'intéresse à un problème différent puisqu'elle prévoit, à partir de la configuration de défreinage du moteur avec le sélecteur en position de petite cylindrée, un passage forcé en grande cylindrée, ce qui a pour effet de limiter les effets d'un emballement car ce changement de cylindrée génère un couple de retenue plus élevé, dans le rapport entre la grande et la petite cylindrée.

Selon l'invention, on commande le changement de cylindrée par un pilotage classique, par exemple à l'aide d'un sélecteur d'alimentation apte, de manière connue en soi, à faire communiquer le conduit de commande soit avec un retour de fluide (première configuration), soit avec une source de fluide sous pression (deuxième configuration). En l'espèce, selon l'invention, cette source est reliée à la chambre de défreinage. Ce sélecteur d'alimentation est par exemple constitué par une électrovalve, ou bien par une valve à commande hydraulique ou autre.

Ainsi, en situation normale de fonctionnement du moteur, dans laquelle la pression dans la chambre de défreinage est suffisante, le changement de cylindrée s'opère par la commande du sélecteur d'alimentation entre ses deux configurations.

Lorsque ce sélecteur d'alimentation est dans sa première configuration, le conduit de commande du sélecteur de cylindrée est relié au retour de fluide (en particulier, il est raccordé à un réservoir de fluide sans pression), de sorte que le sélecteur de cylindrée est dans sa première position, de grande cylindrée, quelle que soit la pression qui règne dans la chambre de défreinage.

En revanche, lorsque le sélecteur d'alimentation est dans sa deuxième configuration et lorsque la pression de fluide dans la chambre de défreinage est suffisante, le sélecteur de cylindrée est placé dans sa deuxième position (de petite cylindrée) puisque le conduit de commande est raccordé à la chambre de défreinage. Lorsque, à partir de cette situation, la pression diminue dans la chambre de défreinage pour devenir inférieure à la première pression seuil, alors le sélecteur de cylindrée revient dans sa première position sous l'effet des premiers moyens de rappel qui surmontent les efforts antagonistes dus à la pression qui règne dans la première chambre de commande, cette pression étant elle-même dépendante de la pression qui règne dans la chambre de défreinage. Ainsi, le sélecteur de cylindrée revient automatiquement dans sa première position, sans qu'il ait été nécessaire de modifier son pilotage en changeant la position du sélecteur d'alimentation.

En d'autres termes, une baisse de pression dans la chambre de défreinage affecte seulement le sélecteur de cylindrée, pour le solliciter vers sa première position. Ce retour automatique en grande cylindrée active de fonctionnement est donc obtenu par le déplacement d'un seul sélecteur (le sélecteur de cylindrée), ce qui permet de le réaliser de manière optimale, tant du point de vue des temps de réponse que de celui de la fiabilité du fonctionnement.

L'invention utilise des moyens pour faire diminuer la pression dans la chambre de défreinage lors d'un début d'emballement du véhicule entraîné par le dispositif d'entraînement. Il s'agit par exemple d'un limiteur de vitesse et de clapets d'isolation d'un circuit ouvert, du type décrit dans FR 1 463 911 pour un circuit ouvert de pelle hydraulique.

Ainsi, avantageusement, la chambre de défreinage est reliée à la conduite d'alimentation en fluide du moteur hydraulique. Cette liaison peut se faire par l'intermédiaire d'un réducteur de pression.

Le fait d'alimenter la chambre de défreinage non pas par une pompe de gavage auxiliaire, mais par la pompe principale alimentant le moteur (de préférence par l'intermédiaire du réducteur de pression qui maintient dans cette chambre une pression tout au plus égale à une pression maximale déterminée) permet de faire en sorte qu'un emballement du véhicule entraîné par le moteur, qui cause une diminution de pression dans la conduite principale d'alimentation, cause également une diminution de pression dans la chambre de défreinage.

Avantageusement, les moyens de commande comprennent le sélecteur d'alimentation précité qui, dans sa deuxième configuration, fait communiquer le conduit de commande avec un conduit d'alimentation en fluide qui communique en permanence avec le chambre de défreinage.

Ceci constitue une manière simple de réaliser le pilotage du sélecteur de cylindrée.

Avantageusement, le conduit d'alimentation est raccordé à une conduite principale d'alimentation du moteur en fluide à haute pression par l'intermédiaire d'un réducteur de pression, ce qui est également le cas du conduit de défreinage auquel est raccordé le conduit d'alimentation.

Selon une autre variante avantageuse pour le pilotage du sélecteur de cylindrée, les moyens de commande de ce dernier comprennent une chambre de commande hydraulique supplémentaire susceptible d'être alimentée en fluide sous pression par un conduit de commande supplémentaire, la chambre de commande hydraulique et la chambre de commande hydraulique supplémentaire ayant respectivement une première et une deuxième paroi mobile, qui délimitent respectivement dans lesdites chambres une première et une deuxième surface d'appui pour le fluide présent dans ces chambres et qui forment respectivement un premier et un deuxième piston de commande aptes à coopérer avec le tiroir mobile du sélecteur de cylindrée ; ces surfaces d'appui sont telles que, lorsque la pression dans la chambre de défreinage qui communique avec la chambre de commande devient inférieure à la première pression seuil, la force exercée par le deuxième piston sur le tiroir du sélecteur est insuffisante pour maintenir ledit tiroir dans sa deuxième position, indépendamment de la pression de fluide qui règne dans la chambre de commande supplémentaire.

De tels moyens de pilotage, utilisant la chambre de commande hydraulique supplémentaire, présentent l'avantage d'être extrêmement peu encombrants car ils évitent la présence d'un sélecteur d'alimentation ayant un tiroir mobile distinct de celui du sélecteur de cylindrée.

Avantageusement, dans ce cas, le conduit de commande communique en permanence avec le conduit de défreinage qui, lui-même, est avantageusement relié à une conduite principale d'alimentation du moteur en fluide à haute pression, par l'intermédiaire d'un réducteur de pression.

L'invention trouve une application avantageuse dans les circuits ouverts comprenant un limiteur de vitesse. En effet, dans ce cas, lorsque la pression diminue dans la conduite principale d'alimentation du moteur et par conséquent dans la chambre de défreinage, le sélecteur de cylindrée se place automatiquement dans sa position de grande cylindrée, dans laquelle le couple disponible est supérieur à celui qui est disponible en petite cylindrée, tandis que la vitesse est inférieure. Simultanément, le limiteur de vitesse crée une contre-pression dans la conduite principale d'échappement du moteur, provoquant ainsi le freinage hydrostatique. A partir d'une position de petite cylindrée, ce changement automatique de cylindrée permet de réduire la vitesse et donc d'assurer un freinage hydrostatique avec le plus grand couple disponible avant que les moyens de freinage mécanique ne soient sollicités.

Cette disposition est particulièrement intéressante lorsqu'elle est associée au fait que, comme indiqué précédemment, le conduit de défreinage, et donc le conduit d'alimentation ou le conduit de commande est raccordé à une conduite principale d'alimentation du moteur par un réducteur de pression, car elle améliore alors la sécurité du fonctionnement d'une machine entraînée par le moteur selon l'invention, dans une situation critique dans laquelle la machine est en descente.

En effet, dans ce cas, la machine a tendance à être entraînée par son propre poids, de sorte que le moteur se met à fonctionner comme une pompe. Dans ce cas, plus la machine s'emballe, plus la pression dans la conduite principale d'alimentation diminue. Lorsque cette pression devient inférieure à la première pression seuil, le sélecteur de cylindrée revient automatiquement dans sa première position, de sorte que le moteur passe en grande cylindrée, ce qui oblige la machine à ralentir.

L'invention sera bien comprise et ses avantages apparaîtront mieux à la lecture de la description détaillée qui suit, d'un mode de réalisation représenté à titre d'exemple non limitatif.

La description se réfère aux dessins annexés sur lesquels :
- la figure 1 est une vue schématique d'un circuit hydraulique comprenant le dispositif conforme à l'invention ;
- la figure 2 montre une variante de ce circuit ;
- la figure 3 montre en section un sélecteur de cylindrée convenant au dispositif de l'invention, par les circuits des figures 1 et 2 ;
- la figure 4 montre un circuit hydraulique comprenant le dispositif selon l'invention pour une variante de réalisation ; et
- la figure 5 est une section d'un sélecteur de cylindrée convenant à cette variante.

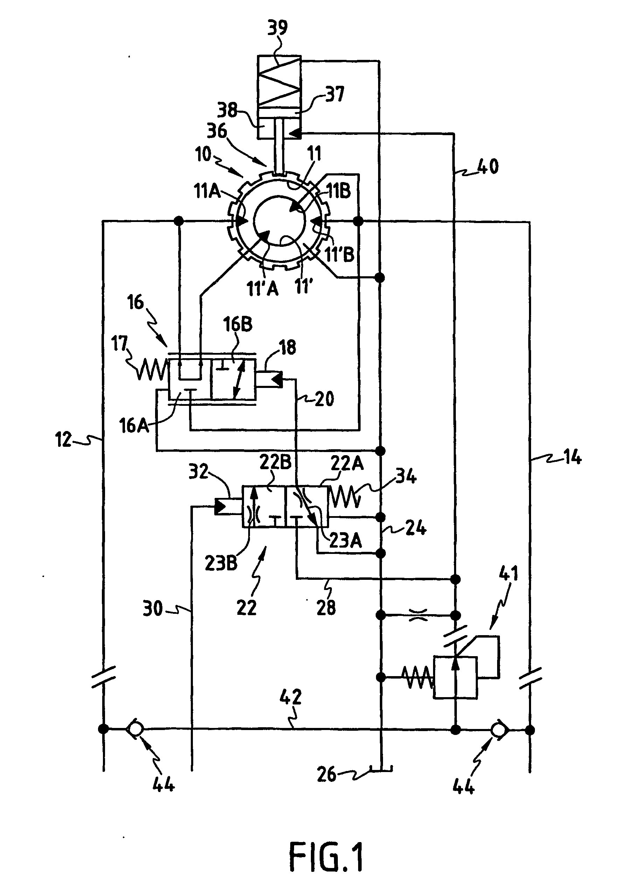

La figure 1 montre un moteur hydraulique 10 ayant deux cylindrées actives de fonctionnement. Plus précisément, ce moteur est schématisé sous la forme de deux demi-moteurs, respectivement 11 et 11'. La grande cylindrée active de fonctionnement du moteur est obtenue quand les deux demi-moteurs sont tous les deux actifs, en étant tous deux raccordés, d'une part à une première conduite principale 12 et, d'autre part, à la deuxième conduite principale 14. Selon la façon dont elles sont raccordées à une pompe principale (non représentée), ces conduites servent respectivement à l'alimentation ou à l'échappement. Il s'agit d'un circuit ouvert, dans lequel la conduite principale qui sert à l'alimentation, est raccordée à l'orifice de refoulement d'une pompe, tandis que la conduite principale qui sert à l'échappement est raccordée à un réservoir sans pression. Ces dispositions ne sont toutefois pas représentées mais sont décrites, par exemple, dans FR 1463 911.

Le circuit de la figure 1 comprend un sélecteur de cylindrée 16 ayant deux positions. Sur la figure 1, il est représenté dans sa première position 16A, dans laquelle deux orifices principaux des demi-moteurs, respectivement 11 A et 11'A sont reliés ensemble et sont raccordés à la conduite principale 12. Les autres orifices principaux, respectivement 11B et 11'B des demi-moteurs sont, quant à eux, raccordés en permanence à la conduite principale 14. Cette situation est celle de la grande cylindrée. Dans sa deuxième position 16B, le sélecteur de cylindrée relie l'orifice principal 11'A du demi-moteur 11' aux orifices principaux 11B et 11'B, eux-mêmes raccordés à la conduite 14. Ainsi, les deux orifices principaux 11'A et 11'B du demi-moteur 11' sont mis à la même pression et ce demi-moteur est inactif. Cette situation est celle de la petite cylindrée.

Le sélecteur de cylindrée 16 est commandé hydrauliquement par une chambre de commande 18 qui est reliée à un conduit de commande 20.

Le sélecteur 16 est constamment rappelé vers sa première position 16A par des premiers moyens de rappel élastiques 17 par exemple constitués par un ressort.

Le circuit comporte en outre un sélecteur d'alimentation 22 qui, sur la figure 1, occupe une première position 22A, dans laquelle il relie le conduit 20 à un retour de fluide. En effet, le conduit 20 est alors relié à une conduite de retour de fluide 24, qui est elle-même raccordée à un réservoir sans pression 26. Dans sa deuxième position 22B, le sélecteur 22 raccorde le conduit de commande 20 à un conduit d'alimentation 28. Le sélecteur 22 comporte donc une première voie raccordée au conduit d'alimentation 20, une deuxième voie raccordée au conduit de retour de fluide 24 et une troisième voie raccordée au conduit d'alimentation 28. Selon la position de ce sélecteur, la première voie est raccordée à l'une ou l'autre des deuxième et troisième voies.

Dans l'exemple représenté, le sélecteur 22 est commandé hydrauliquement, par une conduite de commande hydraulique 30 raccordée à une chambre de commande 32. L'alimentation en fluide de cette chambre déplace le sélecteur 22 dans sa deuxième position 22B, tandis qu'il est naturellement rappelé vers sa première position 22A par des moyens de rappel élastique tels qu'un ressort 34. Le sélecteur 22 et la conduite 30 servent au pilotage du sélecteur de cylindrée 16.

Le circuit de la figure 1 comporte encore un système de freinage du moteur hydraulique qui comprend des moyens de freinage 36, par exemple constitués par un empilage de disques respectivement solidaires du rotor, du stator et intercalés les uns dans les autres, comme le montre le document FR 2 655 090. Toutefois, dans l'exemple représenté, ces moyens de freinage 36 sont constitués par un crabot, comprenant des premières dents de crabot solidaires du rotor et des deuxièmes dents de crabots solidaires du stator. Les dents du crabot viennent en prise en position de freinage et s'écartent les unes des autres en position de défreinage. Le système de freinage comprend une chambre de défreinage 38 qui est susceptible d'être alimentée en fluide par un conduit de défreinage 40 pour solliciter les moyens de freinage vers leur position de défreinage, dans laquelle ils ne coopèrent pas entre-eux pour assurer le freinage.

Les moyens de freinage sont constamment rappelés vers leur position de freinage par des deuxièmes moyens de rappel élastique 39, par exemple constitués par un ressort tel qu'une rondelle belleville.

Pour solliciter les moyens de freinage entre leurs positions de freinage et de défreinage, le système de freinage comprend un piston de freinage 37 lui-même sollicité, dans un sens de déplacement, par la pression du fluide dans la chambre 38 et, dans l'autre sens, par le ressort 39.

Le conduit d'alimentation 28 communique avec la chambre de défreinage 38. Plus précisément, il est raccordé au conduit de défreinage 40. Par exemple, ce raccordement se fait sans l'interposition d'une restriction, auquel cas la pression dans le conduit 28 est en permanence la même que dans la chambre de défreinage 38.

La raideur et la précontrainte du ressort 17 sont telles que l'effet de rappel de ce ressort devient prépondérant par rapport à la pression qui règne dans la chambre 18 dès lors que cette pression devient inférieure à une première pression déterminée PS 1 qui maintient les moyens de freinage en position défreinée.

De son côté, le ressort 39 est tel que l'effet de rappel de ce ressort devient prépondérant par rapport aux contraintes exercées par la pression qui règne dans la chambre 38 lorsque cette pression devient inférieure à une deuxième pression déterminée, ci-après dénommée deuxième pression seuil PS 2.

Lorsque, dans la deuxième configuration du sélecteur d'alimentation 22, le conduit de commande 20 est relié sans restriction à la chambre de défreinage 38 par l'intermédiaire du conduit d'alimentation 28, alors la pression dans la chambre de commande 18 est égale à la pression dans la chambre de défreinage. Lorsque, dans la même configuration du sélecteur d'alimentation, une restriction est interposée entre la chambre de commande 18 et la chambre de défreinage, comme c'est le cas dans l'exemple de la figure 1, sur lequel on voit une restriction dans le conduit 23A du sélecteur 22 qui raccorde sa première voie à sa troisième voie, alors la pression dans la chambre de commande 18 est inférieure à la pression dans la chambre de défreinage, mais elle dépend bien évidemment de celle-ci. Ainsi, connaissant les modalités de raccordement de la chambre 18 à la chambre 38 lorsque le sélecteur 22 occupe sa deuxième configuration, on constate que "la première pression déterminée" de la chambre 18 en dessous de laquelle le sélecteur de cylindrée 16 passe automatiquement dans sa première position sous l'action des moyens de rappel correspond à une "première pression seuil" PS1 dans la chambre de défreinage 38.

Selon l'invention, la première pression seuil est supérieure à la deuxième pression seuil.

Grâce à cela, l'invention permet un changement de cylindrée automatique et simplifié à partir d'une situation de fonctionnement du moteur dans laquelle, en condition "normale" la pression dans la chambre de défreinage est supérieure aux première et deuxième pressions seuil, et
dans laquelle le moteur fonctionne dans sa petite cylindrée active, le sélecteur 22 étant dans sa deuxième configuration 22B et le sélecteur 16 étant sollicité dans sa deuxième position 16B par le raccordement des conduits 20 et 22. Lorsque, à partir de cette situation, la pression diminue dans la chambre de défreinage jusqu'à devenir inférieure à PS1 tout en restant supérieure à PS2, alors la pression dans la chambre 18 devient inférieure à la "première pression déterminée" de sorte que le sélecteur 16 passe automatiquement dans sa première position et le moteur revient automatiquement dans sa grande cylindrée. Il faut que la pression diminue encore pour devenir inférieure à PS2 pour que le défreinage cesse et que les moyens de freinage 36 adoptent leur position de freinage sous l'effet des moyens de rappel 39.

Le conduit d'alimentation 28 est raccordé à une conduite principale d'alimentation du moteur par l'intermédiaire d'un réducteur de pression 41. Plus précisément, l'entrée du réducteur de pression est raccordée à un tronçon de conduite 42 qui est lui-même raccordé aux deux conduites principales 12 et 14 par l'intermédiaire de clapets anti-retour 44. L'entrée du réducteur est ainsi mise à la haute pression d'alimentation du moteur. Le conduit d'alimentation 28 est relié à la sortie du réducteur de pression, de même que le conduit de défreinage 40.

Grâce au réducteur, la pression dans les conduits 28 et 40, et donc dans la chambre de défreinage 38, ne dépasse pas une valeur limite. Par exemple, lorsque le dispositif de moteur sert à assurer le déplacement en translation d'un engin tel qu'une pelle hydraulique, cette pression limite est de l'ordre de 27 bar, tandis que les pressions seuil PS1 et PS2 sont respectivement de l'ordre de 15 à 20 bar et de l'ordre de 9 à 10 bar. De manière générale, on s'arrange de préférence pour que la différence entre la première et la deuxième pression seuil soit de l'ordre de 5 à 10 bar. On s'arrange également pour que la différence entre la première pression seuil et la pression limite entretenue par le réducteur de pression soit au moins de l'ordre de 5 bar.

Dans l'exemple de la figure 1, le sélecteur d'alimentation 22 est à deux positions et à trois voies. Il comporte un premier conduit de liaison 23A qui relie sa première et sa deuxième voie de sorte que, dans sa première configuration, il relie le conduit 20 au retour de fluide et un deuxième conduit de liaison 23B qui relie sa première et troisième voie, de sorte que dans sa deuxième configuration, il relie le conduit 20 au conduit 28. Avantageusement, au moins l'un de ces conduits de liaison présente une restriction. Cette restriction entretient une perte de charge entre le conduit 20 et celui des conduits auquel il est raccordé en fonction de la position du sélecteur 22, ce qui favorise un passage "en douceur" du sélecteur 16 entre ses deux positions.

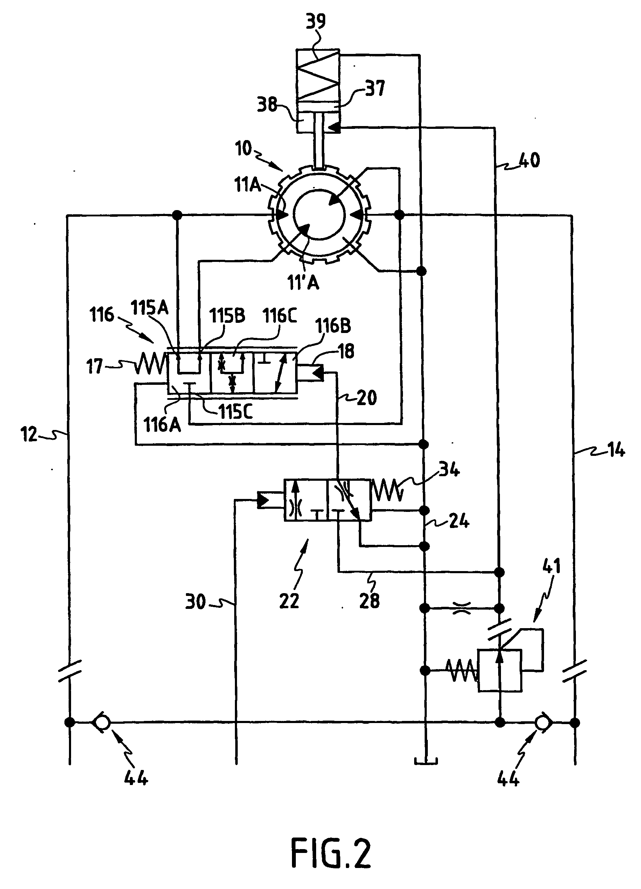

Sur la figure 2, les éléments analogues à ceux de la figure 1 sont affectés des mêmes références. Le sélecteur de cylindrée 116 est légèrement différent de celui de la figure 1, car il présente, entre ses première et deuxième positions stables 116A et 116B, une position intermédiaire 116C, dont la configuration permet d'éviter ou au moins de limiter l'effet de choc lors du changement de cylindrée.

Ce dispositif de sélection de la cylindrée est du type décrit dans la demande de brevet européen n° 1 058 002, dont le contenu est intégralement incorporé dans la présente demande.

Ainsi, dans la première position 116A du sélecteur 116, ses deux premières voies 115A et 115B, respectivement raccordées aux orifices 11A et 11'A du moteur, communiquent librement entre elles, tandis que sa troisième voie 115C en est isolée. Dans la deuxième position 116B, la première voie 115A est isolée des deux autres qui sont reliées entre elles. Dans la position intermédiaire 116C, les voies 115A et 115B d'une part et les voies 115B et 115C d'autre part sont reliées entre elles par, respectivement, un premier et un deuxième passage de liaison. Sur au moins l'un de ces passages est disposée une restriction générant une perte de charge.

Dans l'exemple représenté, les deux passages de 115A à 115B d'une part et de 115B à 115C d'autre part ont chacun une restriction. Le sélecteur 116 est une valve progressive et les moyens de commande de ce sélecteur (chambre 18 et ressort 17) sont avantageusement tels que la situation intermédiaire durant laquelle la troisième position 116C du sélecteur fait communiquer les trois voies est entretenue pendant un laps de temps déterminé, de manière à éviter les chocs lors du changement des cylindrées. Ces moyens de commande peuvent être de tout type décrit dans le document EP-1 058 002.

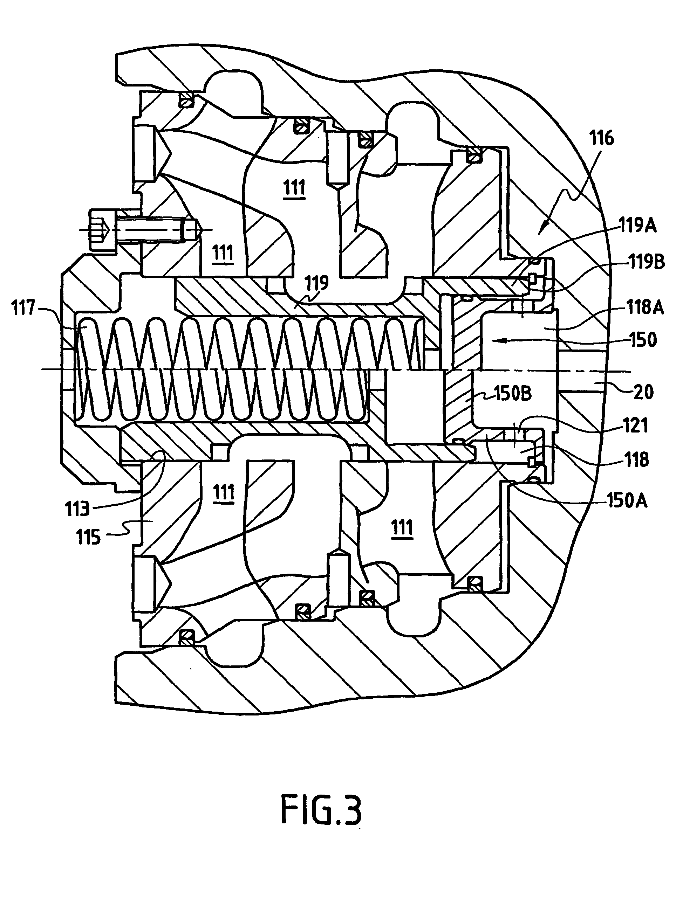

La figure 3 montre une section partielle axiale du moteur 10 selon un exemple de réalisation. Par exemple, ce moteur est du type décrit dans la demande de brevet FR 2 780 450. Le sélecteur de cylindrée 116 est disposé dans un alésage 113 ménagé dans le distributeur interne 115 de ce moteur, dans lequel se trouvent les conduits de distribution 111 servant à raccorder les conduits principaux d'alimentation et d'échappement avec les cylindres du bloc-cylindres à pistons radiaux (non représentés).

Le sélecteur de cylindrée comprend un tiroir 119, qui est mobile dans l'alésage 113 entre deux positions correspondant respectivement à chacune des deux positions du sélecteur précédemment définies.

Les moyens de commande du sélecteur comprennent le ressort de rappel 117 qui rappelle en permanence le tiroir 119 vers sa première position, visible sur la moitié supérieure de la figure 3 et la chambre de commande 118 qui est alimentée en fluide par le conduit de commande 20 pour solliciter le déplacement du tiroir 119 vers sa deuxième position visible sur la moitié inférieure de la figure 3.

Selon la variante représentée, cette chambre présente une conformation particulière qui permet l'utilisation d'un ressort 117 relativement petit, malgré la section relativement importante du tiroir 119. En effet, la surface d'appui sur laquelle s'exerce la pression du fluide contenu dans la chambre de commande pour solliciter le déplacement du tiroir vers sa deuxième position est nettement inférieure à la section du tiroir.

Pour ce faire, le tiroir présente une portion annulaire 119A qui délimite une paroi mobile de la chambre de commande formant ladite surface d'appui 119B.

Plus précisément, cette portion annulaire est formée par une extension de l'extrémité du tiroir formant une cavité dans laquelle l'extension délimite une portée axiale. Une pièce 150 formant une cloison est disposée à l'extrémité de l'alésage 113 en étant calée par rapport à ce dernier. Cette pièce comporte une paroi axiale 150A et un fond 150B transversal à cette paroi. Ainsi, une chambre annulaire est ménagée entre la portion annulaire 119A du tiroir 119 et la paroi axiale de l'alésage 113. Cette chambre annulaire forme la chambre de commande 118, avec laquelle le conduit de commande 20 communique par une « préchambre » centrale 118A formée dans la concavité de la pièce 150 et par des perçages 121 de la paroi axiale 150A. L'extension 119A coopère en coulissement étanche avec la pièce 150.

La surface d'appui pour le fluide présent dans la chambre 118 est seulement formée par l'extrémité libre 119B de l'extension 119. Elle représente par exemple environ 1/3 de la section du tiroir 119.

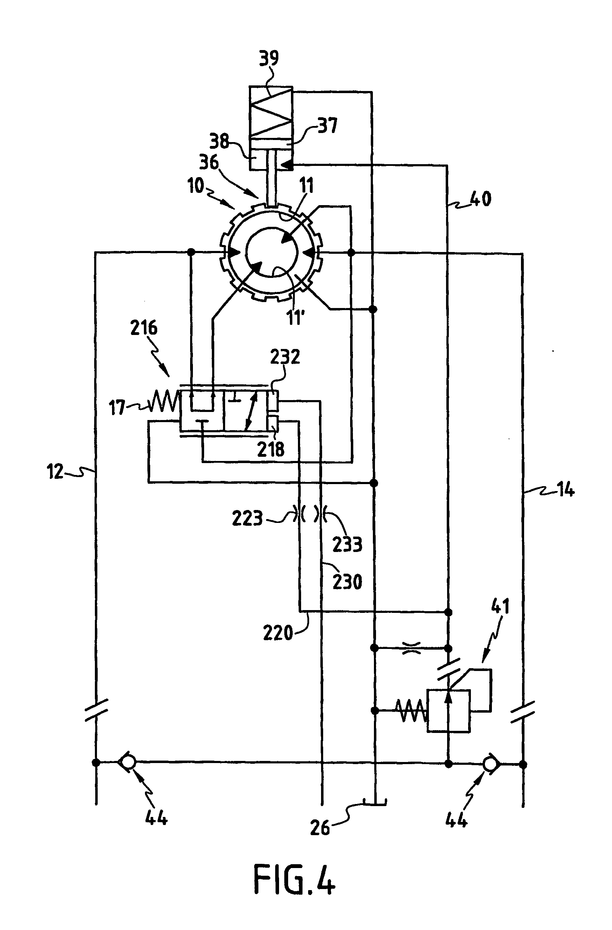

On décrit maintenant la figure 4, sur laquelle les éléments inchangés par rapport à la figure 1 sont désignés par les mêmes références que sur cette figure.

Le sélecteur de cylindrée 216 est rappelé vers sa première position par le ressort 17. Les moyens de commande de ce sélecteur comprennent également la chambre de commande 218 et le conduit de commande 220 qui, dans cette variante, est raccordé en permanence au conduit de défreinage 40 et donc à la chambre de défreinage 38. Avantageusement, une restriction 223 est disposée sur ce conduit de commande 220.

Pour le pilotage du sélecteur 216, les moyens de commande comprennent, en outre, une chambre de commande hydraulique supplémentaire 232 qui est susceptible d'être alimentée en fluide sous pression par un conduit de commande supplémentaire 230, lui-même susceptible d'être mis à une pression de pilotage comme le conduit 30 des figures 1 et 2. Une restriction 233 peut être disposée sur ce conduit 230.

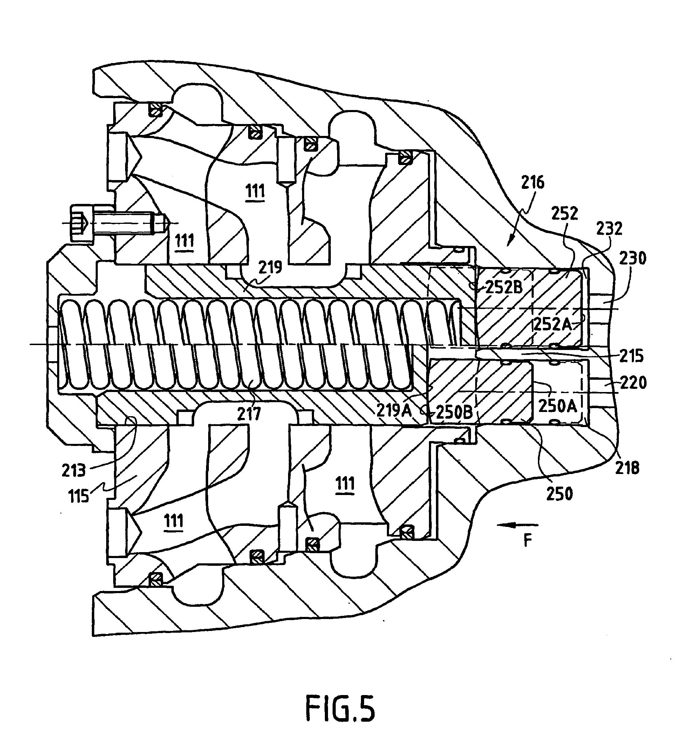

On comprendra mieux la conformation du sélecteur 216 en se reportant à la figure 5. Cette figure montre une vue analogue à celle de la figure 3 et l'on reconnaît le distributeur interne 115 et ses conduits de distribution 111. Le tiroir 219 du sélecteur 216 est monté mobile dans l'alésage 213 du distributeur 115 et est rappelé vers sa première position (représentée sur la moitié supérieure de la figure) par le ressort 217, tandis que les chambres de commande hydraulique, lorsqu'elles sont alimentées en fluide sous pression, sollicitent son déplacement vers sa deuxième position (représentée sur la moitié inférieure de la figure).

L'extrémité de l'alésage 213 opposée au ressort 217 présente une cloison 215 qui s'étend axialement en délimitant ainsi les deux chambres de commande hydraulique 218 et 232 qui sont séparées l'une de l'autre de manière étanche. Un premier et un deuxième piston de commande, respectivement 250 et 252 sont respectivement disposés dans la chambre 218 et dans la chambre 232. Les faces d'extrémité transversales 250A et 252A de ces pistons opposées au tiroir 219 forment respectivement une première et une deuxième paroi mobile pour les chambres 218 et 232.

L'alimentation en fluide des chambres 218 et 232 par le conduit de commande 220 et par le conduit de commande supplémentaire 230 sollicite respectivement le déplacement des pistons dans le sens de la flèche F. Leurs extrémités 250B et 252B opposées aux extrémités 250A et 252A coopèrent alors avec l'extrémité 219A du tiroir pour solliciter ce dernier dans le sens d'un déplacement dans le sens de la flèche F, à l'encontre de l'effort de rappel exercé par le ressort 217.

Les deux pistons 250 et 252 sont indépendants l'un de l'autre. Le déplacement du piston 250 est commandé par la communication de la chambre de commande 220 avec la chambre de défreinage, tandis que celui du piston 252 est commandé par la pression du fluide de pilotage dans le conduit 230.

Les surfaces d'appui 250A et 252A et les pressions de fluide dans les chambres 218 et 230 déterminent l'effort que les pistons peuvent exercer sur le tiroir 219 pour solliciter le tiroir vers sa deuxième position. Les pressions dans les chambres de commande 218 et 232 dépendent directement des pressions dans les conduits 220 et 230, en tenant compte de la présence éventuelle des restrictions 223 et 233.

Les surfaces d'appui 250A et 252A et le ressort 217 de dimensionnés de telle sorte que :
- lorsque la pression dans la chambre de défreinage 38 est stabilisée à sa valeur limite en fonctionnement « normal » du moteur (de l'ordre de 27 bar) et que la pression dans le conduit de commande supplémentaire 230 est sensiblement nulle, alors l'effort exercé par le piston 250 sur le tiroir du fait de l'alimentation en fluide de la chambre 218 est insuffisant pour commander le déplacement du tiroir dans sa deuxième position à l'encontre de l'effort antagoniste exercé par le ressort 217 sur ce dernier;
- lorsque la pression dans la chambre de défreinage est stabilisée à ladite valeur limite et que la pression dans le conduit de commande supplémentaire 230 est à la valeur de pilotage, alors les efforts exercés par les deux pistons 250 et 252 sur le tiroir du fait de l'alimentation en fluide des chambres 218 et 232 placent le tiroir 219 dans sa deuxième position ;
- lorsque la pression dans le conduit de pilotage 230 est à la valeur de pilotage mais que la pression dans la chambre de défreinage devient inférieure à la première valeur seuil PS1, alors l'effort exercé par le piston 252 sur le tiroir 219 du fait de la pression de fluide régnant dans la chambre 232 est insuffisant pour maintenir le tiroir dans sa deuxième position, et celui-ci repasse dans sa première position.

Par exemple, le ressort est dimensionné pour exercer sur le tiroir, dans la première position de ce dernier, un effort de l'ordre de 800 N, correspondant à une pression équivalente de l'ordre 5 bar, et, dans la deuxième position de ce tiroir, un effort de l'ordre de 1115 N correspondant à une pression équivalente de l'ordre de 7 bar, tandis que les diamètres des premier et deuxième pistons sont de l'ordre de, respectivement, 18 mm et 22 mm et que la pression de pilotage et la pression PS1 sont respectivement de l'ordre de 10 bar et 15 bar.

Il convient de souligner que, dans toutes les variantes représentées sur les figures, le conduit de commande peut être relié à la chambre de défreinage pour établir une communication de fluide à débit contrôlé par une restriction entre cette dernière et la chambre de commande.

Sur les figures 1 et 2, cette communication est contrôlée par deux restrictions indépendantes selon la position du sélecteur 22. Sur la figure 4, elle est permanente et contrôlée par la restriction 223.

## Revendications

1. Dispositif d'entraînement avec un moteur hydraulique (10) comprenant un sélecteur de cylindrée (16 ; 116 ; 216) susceptible d'être déplacé entre une première position (16A ; 116A) correspondant à une grande cylindrée active de fonctionnement et une deuxième position (16B ; 116B) correspondant à une petite cylindrée active de fonctionnement, le dispositif comprenant des moyens de commande du sélecteur qui comprennent une chambre de commande hydraulique (18 ; 118 ; 218) susceptible d'être alimentée en fluide sous pression par un conduit de commande (20 ; 220) pour solliciter le déplacement du sélecteur de cylindrée dans sa deuxième position à l'encontre de l'effort exercé par des premiers moyens de rappel (17 ; 117 ; 217), le dispositif comprenant en outre un système de freinage du moteur hydraulique qui comporte des moyens de freinage (36) mobiles entre une position de freinage et une position de défreinage, ainsi qu'une chambre de défreinage (38) susceptible d'être alimentée en fluide sous pression par un conduit de défreinage (40) pour solliciter lesdits moyens de freinage vers leur position de défreinage à l'encontre de l'effort exercé par des deuxièmes moyens de rappel. (39),
**caractérisé en ce que** le conduit de commande (20 ; 220) est susceptible d'être relié à la chambre de défreinage (38) pour faire communiquer cette dernière avec la chambre de commande (18 ; 118 ; 218) et **en ce que** les premiers moyens de rappel (17 ; 117 ; 217) sont aptes à rappeler le sélecteur de cylindrée (16 ; 116; 216) dans sa première position de grande cylindrée (16A ; 116A) lorsque, alors que la chambre de commande (18 ; 118 ; 218) communique avec la chambre de défreinage (38) par le conduit de commande (20 ; 220), la pression dans ladite chambre de défreinage devient inférieure à une première pression seuil (PS1), tandis que les deuxièmes moyens de rappel (39) sont aptes à rappeler les moyens de freinage (36) dans leur position de freinage lorsque la pression dans la chambre de défreinage devient inférieure à une deuxième pression seuil (PS2) inférieure à ladite première pression seuil (PS1).

2. Dispositif selon la revendication 1, **caractérisé en ce que** la chambre de défreinage (38) est reliée à la conduite d'alimentation (12, 14) du moteur hydraulique.

3. Dispositif selon la revendication 1 ou 2, **caractérisé en ce que** les moyens de commande du sélecteur de cylindrée (16) comprennent, en outre, un sélecteur d'alimentation (22) apte à adopter une première configuration (22A) dans laquelle il fait communiquer le conduit de commande (20) avec un retour de fluide (24, 26) et une deuxième configuration (22B) dans laquelle il fait communiquer le conduit de commande (20) avec un conduit d'alimentation en fluide (28) et **en ce que** le conduit d'alimentation (28) communique en permanence avec la chambre de défreinage (38).

4. Dispositif selon les revendications 2 et 3, **caractérisé en ce que** le conduit d'alimentation (28) est raccordé à une conduite principale d'alimentation (12, 14) du moteur (10) en fluide à haute pression par l'intermédiaire d'un réducteur de pression (41).

5. Dispositif selon la revendication 3 ou 4, **caractérisé en ce que** le sélecteur d'alimentation (22) comporte un premier conduit de liaison (23A) apte, dans la première configuration dudit sélecteur à faire communiquer le conduit de commande (20) avec un retour de fluide (24, 26), ce premier conduit de liaison présentant une restriction.

6. Dispositif selon l'une quelconque des revendications 3 à 5, **caractérisé en ce que** le sélecteur d'alimentation (22) comporte un deuxième conduit de liaison (23B) apte, dans la deuxième configuration dudit sélecteur à faire communiquer le conduit de commande (20) avec le conduit d'alimentation (28), ce deuxième conduit de liaison présentant une restriction.

7. Dispositif selon l'une quelconque des revendications 1 à 6, **caractérisé en ce que** le sélecteur de cylindrée (116) comprend un tiroir mobile (119) présentant une portion annulaire (119A) qui délimite une paroi mobile de la chambre de commande formant la surface d'appui (119B) sur laquelle s'exerce la pression du fluide présent dans ladite chambre pour solliciter le déplacement du tiroir vers sa deuxième position.

8. Dispositif selon la revendication 1 ou 2, **caractérisé en ce que** le sélecteur de cylindrée (216) comprend un tiroir mobile (219) et **en ce que** les moyens de commande du sélecteur de cylindrée comprennent, en outre, une chambre de commande hydraulique supplémentaire (232) susceptible d'être alimentée en fluide sous pression par un conduit de commande supplémentaire (230), la chambre hydraulique (218) et la chambre hydraulique supplémentaire (232) ayant respectivement une première et une deuxième paroi mobile (250A, 252A), qui délimitent respectivement dans lesdites chambres une première et une deuxième surface d'appui pour le fluide présent dans ces chambres et qui forment respectivement un premier et un deuxième piston de commande (250, 252) aptes à coopérer avec le tiroir mobile du sélecteur de cylindrée et **en ce que** les surfaces d'appui sont telles que, lorsque la pression dans la chambre de défreinage (38) qui communique avec la chambre de commande (218) devient inférieure à la première pression seuil (PS1), la force exercée par le deuxième piston sur le tiroir (219) du sélecteur (216) est insuffisante pour maintenir ledit tiroir dans sa deuxième position, indépendamment de la pression de fluide qui règne dans la chambre de commande supplémentaire (232).

9. Dispositif selon la revendication 8, **caractérisé en ce que** le conduit de commande (220) communique en permanence avec le conduit de défreinage (40).

10. Dispositif selon la revendication 9, **caractérisé en ce que** le conduit de commande (220) communique en permanence avec le conduit de défreinage (40) par l'intermédiaire d'une restriction (223).

11. Dispositif selon l'une quelconque des revendications 1 à 10, **caractérisé en ce que** la première pression seuil (PS1) est voisine de 15 à 20 bars, tandis que la deuxième pression seuil (PS2) est voisine de 9 à 10 bars.

12. Dispositif selon l'une quelconque des revendications 1 à 11, **caractérisé en ce que** la différence entre la première et la deuxième pression seuil (PS1, PS2) est de l'ordre de 5 à 10 bars.

13. Dispositif selon l'une quelconque des revendications 1 à 12, **caractérisé en ce que** le sélecteur de cylindrée (116) présente trois voies, ses première et deuxième voies (115A, 115B) étant reliées entre elles et isolées de la troisième voie (115C) dans la première position (116A) de ce sélecteur, tandis que ses deuxième et troisième voies (115B, 115C) sont reliées et isolées de la première voie (115A) dans sa deuxième position (116B) et **en ce que** ledit sélecteur de cylindrée (116) est susceptible d'occuper une position intermédiaire (116C) entre ses première et deuxième positions, dans laquelle ses trois voies sont reliées et dans laquelle la section d'au moins l'un des passages entre les première et deuxième voies (115A, 115B) et entre les deuxième et troisième voies (115B, 115C) est restreinte.

14. Dispositif selon la revendication 13, **caractérisé en ce qu'**il comporte des moyens pour conserver la position intermédiaire (116C) du sélecteur (116) pendant un laps de temps.

## Claims

1. Drive apparatus with a hydraulic motor (10) having a cubic capacity selector (16; 116; 216) suitable for being moved between a first position (16A; 116A) corresponding to a large active operating cubic capacity and a second position (16B; 116B) corresponding to a small active operating cubic capacity, the apparatus comprising control means for controlling the selector, which means comprise a hydraulic control chamber (18; 118; 218) suitable for being fed with fluid under pressure via a control duct (20; 220) for the purpose of urging the cubic capacity selector to move to its second position against the force exerted by first return means (17; 117; 217), the apparatus further comprising a brake system for braking the hydraulic motor, which brake system comprises brake means (36) mounted to move between a braking position and a brake release position, and a brake release chamber (38) suitable for being fed with fluid under pressure via a brake release duct (40) for the purpose of urging said brake means towards their brake release position against the force exerted by second return means (39);
said apparatus being **characterised in that** the control duct (20; 220) is suitable for being connected to the brake release chamber (38) for the purpose of putting said brake release chamber into communication with the control chamber (18; 118; 218), and **in that** the first return means (17; 117; 217) are suitable for returning the cubic capacity selector (16; 116; 216) to its large cubic capacity first position (16A; 116A) when, while the control chamber (18; 118; 218) is communicating with the brake release chamber (38) via the control duct (20; 220), the pressure in said brake release chamber becomes lower than a first threshold pressure (PS1), whereas the second return means (39) are suitable for returning the brake means (36) to their braking position when the pressure in the brake release chamber becomes lower than a second threshold pressure (PS2) which is lower than said first threshold pressure (PS1).

2. Apparatus according to claim 1, **characterised in that** the brake release chamber (38) is connected to the feed duct (12, 14) of the hydraulic motor.

3. Apparatus according to claim 1 or 2, **characterised in that** the control means for controlling the cubic capacity selector (16) further comprise a feed selector (22) suitable for taking up a first configuration (22A) in which it puts the control duct (20) into communication with the fluid return (24, 26), and a second configuration (22B) in which it puts the control duct (20) into communication with a fluid feed duct (28), and **in that** the feed duct (28) communicates continuously with the brake release chamber (38).

4. Apparatus according to claims 2 and 3, **characterised in that** the feed duct (28) is connected to a feed main duct (12, 14) for feeding the motor (10) with fluid at high pressure via a pressure reducer (41).

5. Apparatus according to claim 3 or 4, **characterised in that** the feed selector (22) includes a first link duct (23A) suitable for putting the control duct (20) into communication with a fluid return (24, 26) when said selector is in the first configuration, said first link duct having a constriction.

6. Apparatus according to any one of claims 3 to 5, **characterised in that** the feed selector (22) has a second link duct (23B) suitable for putting the control duct (20) into communication with the feed duct (28) when said selector is in the second configuration, said second link duct having a constriction.

7. Apparatus according to any one of claims 1 to 6, **characterised in that** the cubic capacity selector (116) comprises a moving slide (119) having an annular portion (119A) which defines a moving wall of the control chamber that forms a bearing surface (119B) against which the pressure of the fluid present in said chamber is exerted to urge the slide to move into its second position.

8. Apparatus according to claim 1 or 2, **characterised in that** the cubic capacity selector (216) comprises a moving slide (219) and **in that** the control means for controlling the cubic capacity selector further comprise an additional hydraulic control chamber (232) suitable for being fed with fluid under pressure via an additional control duct (230), the hydraulic chamber (218) and the additional hydraulic chamber (232) respectively having first and second moving walls (250A, 252A) which respectively define in said chambers first and second bearing surfaces for the fluid present in said chambers, and which respectively form first and second control pistons (250, 252) suitable for co-operating with the moving slide of the cubic capacity selector, and **in that** the bearing surfaces are such that, when the pressure in the brake release chamber (38) which is in communication with the control chamber (218) becomes lower than the first threshold pressure (PS1), the force exerted by the second piston on the slide (219) of the selector (216) is insufficient to hold said slide in its second position, independently of the fluid pressure that prevails in the additional control chamber (232).

9. Apparatus according to claim 8, **characterised in that** the control duct (220) communicates continuously with the brake release duct (40).

10. Apparatus according to claim 9, **characterised in that** the control duct (220) communicates continuously with the brake release duct (40) via a constriction (223).

11. Apparatus according to any one of claims 1 to 10, **characterised in that** the first threshold pressure (PS1) lies approximately in the range 15 bars to 20 bars, while the second threshold pressure (PS2) lies approximately in the range 9 bars to 10 bars.

12. Apparatus according to any one of claims 1 to 11, **characterised in that** the difference between the first and second threshold pressures (PS1, PS2) lies approximately in the range 5 bars to 10 bars.

13. Apparatus according to any one of claims 1 to 12, **characterised in that** the cubic capacity selector (116) has three ports, its first and second ports (115A, 115B) being connected together and isolated from the third port (115C) when the cubic capacity selector is in the first position (116A), while its second and third ports (115B, 115C) are connected together and isolated from the first port (115A) when said selector is in its second position (116B), and **in that** said cubic capacity selector (116) is suitable for taking up an intermediate position (116C) between its first and second positions, and in which all three of its ports are interconnected and the cross-section of at least one of the passageways between the first and second ports (115A, 1115B) and between the second and third ports (115B, 115C) is constricted.

14. Apparatus according to claim 13, **characterised in that** it comprises means for holding the selector (116) in the intermediate position (116C) for a lapse of time.

## Patentansprüche

1. Vorrichtung zum Antrieb mit einem Hydraulikmotor (10), umfassend eine Hubvolumenauswahl (16; 116; 216), die geeignet ist zwischen einer ersten Position (16A; 116A), die einem großen aktiven Arbeitshubraum entspricht, und einer zweiten Position (16B; 116B), die einem kleinen aktiven Arbeitshubraum entspricht, bewegt zu werden, wobei die Vorrichtung Steuermittel der Auswahl umfaßt, die eine hydraulische Steuerkammer (18; 118, 218) umfassen, geeignet mit einem Fluid unter Druck durch eine Steuerleitung (20; 220) versorgt zu werden, um die Bewegung der Hubvolumenauswahl in ihre zweiten Position gegen die Kraft zu belasten, die durch erste Rückstellmittel (17; 117; 217) ausgeübt wird, wobei die Vorrichtung außerdem ein Bremssystem des Hydraulikmotors umfaßt, das Bremsmittel (36) umfaßt, die beweglich sind zwischen einer Bremsposition und einer Bremslöseposition, sowie eine Bremslösekammer (38), die geeignet ist, mit Fluid unter Druck durch eine Bremslöseleitung (40) versorgt zu werden, um die Bremsmittel zu ihrer Bremslöseposition hin gegen die Kraft zu belasten, die durch zweite Rückstellmittel (39) ausgeübt wird,
**dadurch gekennzeichnet, daß** die Steuerleitung (20; 220) geeignet ist, mit der Bremslösekarmmer (38) verbunden zu werden, um letztere mit der Steuerkammer (18; 118; 218) kommunizieren zu lassen und **dadurch**, daß die ersten Rückstellmittel (17; 117; 217) geeignet sind, die Hubvolumenauswahl (16; 116; 216) in ihre erste Position großen Hubraums (16A; 116A) zurückzustellen, wenn, während die Steuerkammer (18; 118; 218) mit der Bremslösekammer (38) durch die Steuerleitung (20; 220) kommuniziert, der Druck in der Bremslösekammer niedriger als eine erste Druckschwelle (PS1) wird, wohingegen die zweiten Rückstellmittel (39) geeignet sind, die Bremsmittel (36) in deren Bremsposition zurückzustellen, wenn der Druck in der Bremslösekammer niedriger als eine zweite Druckschwelle (PS2) wird, die unter der ersten Druckschwelle (PS1) liegt.

2. Vorrichtung nach Anspruch 1, **dadurch gekennzeichnet, daß** die Bremslösekammer (38) verbunden ist mit der Versorgungsleitung (12, 14) des Hydraulikmotors.

3. Vorrichtung nach Anspruch 1 oder 2, **dadurch gekennzeichnet, daß** die Steuermittel der Hubvolumenauswahl (16) außerdem eine Versorgungsauswahl (22) umfassen, die geeignet ist, eine erste Konfiguration (22A) anzunehmen, in der sie die Steuerleitung (20) mit einem Rücklauffluid (24, 26) kommunizieren läßt, und eine zweite Konfiguration (22B), in der sie die Steuerleitung (20) mit einer Fluidversorgungsleitung (28) kommunizieren läßt und **dadurch**, daß die Versorgungsleitung (28) permanent mit der Bremslösekammer (38) kommuniziert.

4. Vorrichtung nach den Ansprüchen 2 und 3, **dadurch gekennzeichnet, daß** die Versorgungsleitung (28) verbunden ist mit einer Hauptversorgungsleitung (12, 14) des Motors (10) an Fluid mit hohem Druck mittels eines Druckreduzierers (41).

5. Vorrichtung nach Anspruch 3 oder 4, **dadurch gekennzeichnet, daß** die Versorgungsauswahl (22) eine erste Verbindungsleitung (23A) umfaßt, geeignet, in der ersten Konfiguration der Auswahl die Steuerleitung (20) mit dem Rücklauffluid (24, 26) kommunizieren zu lassen, wobei diese erste Verbindungsleitung eine Beschränkung aufweist.

6. Vorrichtung nach einem der Ansprüche 3 bis 5, **dadurch gekennzeichnet, daß** die Versorgungsauswahl (22) eine zweite Verbindungsleitung (23B) umfaßt, die geeignet ist, in der zweiten Konfiguration der Auswahl die Steuerleitung (20) mit der Versorgungsleitung (28) kommunizieren zu lassen, wobei diese zweite Verbindungsleitung eine Beschränkung aufweist.

7. Vorrichtung nach einem der Ansprüche 1 bis 6, **dadurch gekennzeichnet, daß** die Hubvolumenauswahl (116) einen beweglichen Schieber (119) umfaßt, der einen Ringteil (119A) aufweist, der eine bewegliche Wand der Steuerkammer begrenzt, welche die Stützfläche (119B) bildet, auf die der Druck des Fluids ausgeübt wird, das in der Kammer vorliegt, um die Bewegung des Schiebers zu seiner zweiten Position zu belasten.

8. Vorrichtung nach Anspruch 1 oder 2, **dadurch gekennzeichnet, daß** die Hubvolumenauswahl (216) einen beweglichen Schieber (219) umfaßt und daß die Steuermittel der Hubvolumenauswahl außerdem eine zusätzliche hydraulische Steuerkammer (232) umfassen, die geeignet ist, mit Fluid unter Druck durch eine zusätzliche Steuerleitung (230) versorgt zu werden, wobei die Hydraulikkammer (218) und die zusätzliche Hydraulikkammer (232) jeweils eine erste und eine zweite bewegliche Wand (250A, 252A) haben, die jeweils in den Kammern eine erste und eine zweite Stützfläche für das Fluid begrenzen, das in diesen Kammern vorliegt, und die jeweils einen ersten und einen zweiten Steuerkolben (250, 252) bilden, die geeignet sind, mit dem beweglichen Schieber der Hubvolumenauswahl zusammenzuwirken und **dadurch**, daß die Stützflächen als derart vorliegen, daß, wenn der Druck in der Bremslösekammer (38), die mit der Steuerkammer (218) kommuniziert, kleiner als die erste Druckschwelle (PS1) wird, die durch den zweiten Kolben auf den Schieber (219) der Auswahl (216) ausgeübte Kraft unzureichend ist, um den Schieber in seiner zweiten Position unabhängig vom Fluiddruck zu halten, der in der zusätzlichen Steuerkammer (232) herrscht.

9. Vorrichtung nach Anspruch 8, **dadurch gekennzeichnet, daß** die Steuerleitung (220) permanent mit der Bremslöseleitung (40) kommuniziert.

10. Vorrichtung nach Anspruch 9, **dadurch gekennzeichnet, daß** die Steuerleitung (220) permanent mit der Bremslöseleitung (40) mittels einer Beschränkung (223) kommuniziert.

11. Vorrichtung nach einem der Ansprüche 1 bis 10, **dadurch gekennzeichnet, daß** die erste Druckschwelle (PS1) nahe 15 bis 20 Bar ist, während die zweite Druckschwelle (PS2) nahe 9 bis 10 Bar ist.

12. Vorrichtung nach einem der Ansprüche 1 bis 11, **dadurch gekennzeichnet, daß** die Differenz zwischen der ersten und der zweiten Druckschwelle (PS1, PS2) in der Größenordnung von 5 bis 10 Bar ist.

13. Vorrichtung nach einem der Ansprüche 1 bis 12, **dadurch gekennzeichnet, daß** die Hubvolumenauswahl (116) drei Wege aufweist, wobei ihre ersten und zweiten Wege (115A, 115B) untereinander verbunden und isoliert von dem dritten Weg (115C) in der ersten Position (116A) dieser Auswahl sind, wohingegen ihre zweiten und dritten Wege (115B, 115C) verbunden und von dem ersten Weg (115A) isoliert sind in der zweiten Position (116B), und **dadurch**, daß die Hubvolumenauswahl (116) geeignet ist, eine Zwischenposition (116C) zwischen ihren ersten und zweiten Positionen einzunehmen, in der die drei Wege verbunden sind und in der der Abschnitt wenigstens einer der Durchgänge zwischen den ersten und zweiten Wegen (115A, 115B) und zwischen den zweiten und dritten Wegen (115B, 115C) beschränkt ist.

14. Vorrichtung nach Anspruch 13, **dadurch gekennzeichnet, daß** sie Mittel umfaßt, um die Zwischenposition (116C) der Auswahl (116) für eine kurze Zeitspanne zu bewahren.
